# EUROPÄISCHE PATENTSCHRIFT

(11) **EP 2 520 393 B1**
(45) Veröffentlichungstag und Bekanntmachung des Hinweises auf die Patenterteilung: **06.09.2023**
(21) Anmeldenummer: 12166421.3
(22) Anmeldetag: 02.05.2012
(51) Int. Cl.: B23K 1/015, B23K 3/08, G01K 1/14, G01K 1/02, B23K 31/12

(54) **ÜBERWACHUNGSVORRICHTUNG FÜR DAMPFPHASEN-LÖTANLAGE ; DAMPFPHASEN-LÖTANLAGE MIT EINER SOLCHEN VORRICHTUNG ; VERFAHREN ZUM ÜBERWACHEN EINER DAMPFPHASEN-LÖTANLAGE**
MONITORING DEVICE FOR STEAM PHASE SOLDERING SYSTEM, STEAM PHASE SOLDERING SYSTEM WITH SUCH A DEVICE, METHOD OF MONITORING A STEAM PHASE SOLDERING SYSTEM
DISPOSITIF DE SURVEILLANCE POUR UNE INSTALLATION DE BRASAGE EN PHASE VAPEUR, INSTALLATION DE BRASAGE EN PHASE VAPEUR AVEC UN TEL DISPOSITIF, PROCÉDÉ DE SURVEILLANCE D'UNE INSTALLATION DE BRASAGE EN PHASE VAPEUR

(30) Priorität: 02.05.2011 DE 202011100094 U
(43) Veröffentlichungstag der Anmeldung: 07.11.2012
(73) Patentinhaber: Asscon Systemtechnik-Elektronik GmbH, 86343 Königsbrunn (DE)
(72) Erfinder: Zabel, Claus, 86199 Augsburg (DE)
(74) Vertreter: Bardehle Pagenberg Partnerschaft mbB Patentanwälte Rechtsanwälte

(56) Entgegenhaltungen:
- DE-A1-102006 025 205
- DE-A1-102007 020 176
- DE-U1-202009 014 590
- JP-A- 5 135 852
- JP-A- 2004 179 461
- JP-A- 2004 247 519
- JP-A- 2011 079 055
- HANS BELL ET AL: "TEMPERATURMESSUNGEN BEIM WEICHLöTEN", INTERNET CITATION, 1 November 2003 (2003-11-01), pages 1-11, XP003033473, Retrieved from the Internet: URL:http://www.gp-ics.com/pdf/far2.pdf [retrieved on 2014-08-01]

## Beschreibung

### 1. Technisches Gebiet

Die vorliegende Erfindung betrifft eine Überwachungsvorrichtung, eine Dampfphasen-Lötanlage mit der Überwachungsvorrichtung und ein Verfahren zum Überwachen einer Dampfphasen-Lötanlage.

### 2. Stand der Technik

Lötprozesse spielen in vielen Bereichen der Industrie eine wichtige Rolle. Damit werden viele kleine einfache Bauteile, wie etwa Widerstände und große hochkomplexe Bauteile, beispielsweise Mikroprozessoren, auf Platinen verbunden.

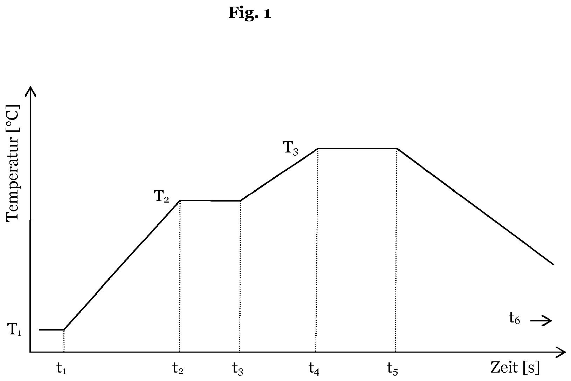

Durch die rasanten Fortschritte der Mikroelektronik werden immer feinere Strukturen auf Halbleiter-Chips und deren Anschlusstechnik realisiert. Dadurch wird gleichzeitig die weitere Verarbeitung dieser Bauteile immer aufwändiger. Insbesondere können große Temperaturänderungen in einem kleinen Zeitintervall zu großen mechanischen Spannungen innerhalb dieser Bauteile führen, was deren Beschädigung oder vorzeitigen Ausfall hervorrufen kann. Um die thermische Belastung während eines Lötprozesses innerhalb zulässiger Grenzen zu halten, geben die Hersteller vieler elektronischer Bauelemente ein Lötprofil vor, anhand dessen sie exakt festlegen, wie der Aufheiz- und Abkühlvorgang für das Löten zu erfolgen hat. In der Fig. 1 ist schematisch der zeitliche Verlauf eines Lötprofils anhand eines sogenannten Rampenprofils dargestellt. Dampfphasen-Lötanlagen sind gut geeignet, diese hohen Anforderungen zu erfüllen. Ausführungsbeispiele dieser Maschinen weisen eine Prozesskammer mit einer inerten, elektrisch nicht leitenden Prozessflüssigkeit auf, die durch eine oder mehrere Heizungen bis zu deren Siedepunkt erwärmt wird. Bei weiterer Energiezuführung bildet sich über der Prozessflüssigkeit in der Prozesskammer eine Dampfzone aus, die im Folgenden als Dampfdecke bezeichnet wird.

Über den Phasenübergang vom flüssigen in den dampfförmigen Aggregatszustand speichert der Dampf Energie in Form latenter Wärme. Beim Einbringen einer zu lötenden Baugruppe in die Dampfdecke in der Prozesskammer kondensiert der Dampf auf der Baugruppe und bildet einen die Baugruppe komplett ein- und abschließenden Flüssigkeitsfilm. Der Flüssigkeitsfilm schützt die Lötverbindungen während der Aufheizphase und während des Zeitintervalls, in dem das Lot flüssig ist, vor der Einwirkung oxydierender Substanzen.

Beim Einbringen des zu lötenden Werkstücks in die Dampfdecke in der Prozesskammer kondensiert das Volumen des Dampfes, das sich oberhalb des Lötguts befindet, praktisch instantan auf dem Lötgut. Dadurch entsteht beim Einfahren des Lötguts im Temperaturkreislauf ein Eintauchpeak, der bereits empfindliche Bauelemente der zu lötenden Baugruppe schädigen kann. In der Gebrauchsmusterschrift DE 20 2009 014 590 U1 offenbart die Anmelderin eine Vorrichtung mit deren Hilfe der Eintauchpeak minimiert werden kann. Damit kann eine erste Abweichung der realen Aufheizkurve von dem in der Fig. 1 vorgegebenen Lötprofil vermieden werden.

Wie in der Fig. 1 dargestellt ist, soll im Zeitbereich zwischen t₁ und t₂ die Temperatur des Lötguts linear mit der Zeit ansteigen. Aus dem Stand der Technik sind bereits viele Verfahren und/oder Vorrichtungen bekannt, mit denen versucht wird, den linearen Temperaturanstieg des Lötprofils nachzubilden.

JP 2011 079055 A, Ausgangspunkt für die vorliegende Erfindung, offenbart ein Testsubstrat zur Verwendung in einer Messvorrichtung für Aufschmelzöfen, das Thermoelemente aufweist, die die Platten aus Basismaterial kontaktieren, wodurch die Temperatur von Platten aus Basismaterial erfasst wird.

Die Gebrauchsmusterschrift DE 297 04 629 U1 der Anmelderin beschreibt eine Vorrichtung zum gesteuerten Vorerwärmen des Lötguts oder einer Baugruppe vor deren Einbringen in die Dampfdecke der Dampfphasen-Lötanlage, in der dann das Aufheizen bis zur Löttemperatur und der eigentliche Lötvorgang stattfinden.

In der Patentschrift DE 101 59 057 B4 offenbart die Anmelderin ein Verfahren und eine Vorrichtung, mittels derer der Temperaturgradient einer Dampfphasen-Lötanlage während der Aufheizphase automatisch eingestellt und überwacht werden kann. Dazu wird die Größe des Lötguts mittels Sensoren und/oder einer Kamera analysiert.

Die Offenlegungsschrift DE 10 2007 022 596 A1 beschreibt ein Verfahren, bei dem die Masse des zu verlötenden Werkstücks gemessen wird und zur Bestimmung der für einen vorgegebenen Temperaturanstieg benötigten Heizleistung benutzt wird.

Die JP 2011 079 055 A stellt ein Substrat bereit zum Messen der Temperaturverteilung in einem Reflow-Ofen, wobei das Substrat für ein wiederholtes dauerfest Anwenden zum Messen der Temperaturverteilung in dem Reflow-Ofen ist und zum Quantifizieren einer Bedingung innerhalb des Reflow-Ofens. Das Substrat misst eine Bedingung des Reflow-Ofens während es durch den Reflow-Ofen transportiert wird. Das Substrat umfasst ein Basismaterial, das sich aus einem ebenen Element zusammensetzt, eine oder mehrere Anschlussplatten, die auf dem Basismaterial angeordnet sind und deren Wärmekapazität bekannt ist und ein Detektionsmittel (Temperaturfühler), die an den Anschlussplatten anliegen und die Temperatur der Platten detektieren.

Die Offenlegungsschrift DE 10 2006 025 205 A1 betrifft eine Vorrichtung zum Dampfphasenlöten mit einer von oben zu beschickenden Lötzone und einer darüber angeordneten Kühlzone. Damit ein zu lötendes Werkstück einem vorgegebenen Temperatur-Zeit-Profil entsprechend durch die unterschiedlichen Temperaturschichten des in dieser Vorrichtung vorhandenen Dampfes gefahren werden kann, ist wenigstens eine Temperatursonde vorgesehen, mit der der vertikale Temperaturverlauf innerhalb der Lötzone zu ermitteln ist.

Die Patentschrift DE 198 26 520 C1 offenbart ein Verfahren, das die Wärmeübertragung auf ein Werkstück durch eine Höhenvariation des Werkstücks innerhalb der Dampfdecke steuert.

Die Patentschrift DE 100 25 472 C2 beschreibt eine Dampfphasen-Lötanlage, bei der der Aufheiz- und Lötvorgang auf ein Prozesszonenheizmodul und ein Lötzonenheizmodul aufgeteilt ist, in denen die Heizleistung unabhängig von einander einstellbar sind, um damit zonenbezogen überhitzten Dampf zu erzeugen.

Die beispielhaft oben angegebenen Verfahren und Vorrichtungen weisen jedoch immer noch signifikante Nachteile auf. Die Größen, die zum Steuern des in der Fig. 1 dargestellten Temperaturanstiegs eingesetzt werden, werden aus der Messung anderer Größen erschlossen und damit auf indirektem Wege bestimmt. Aufgrund der thermischen Trägheit des Systems bestehend aus siedender Flüssigkeit und Dampfdecke sind diese Messungen zudem mit einer großen Unsicherheit behaftet. Dies gilt auch für das Hoch- und Herunterfahren des Lötguts in der Dampfdecke. Insbesondere haben die im Stand der Technik offenbarten Verfahren und Vorrichtungen Schwierigkeiten das Temperaturplateau im Zeitintervall t₂ bis t₃ bei einer Temperatur T₂ nachzubilden. Schließlich benötigen die bisher bekannten Verfahren und Vorrichtungen zumindest eine Testlötung, um die Steuergröße zum Beeinflussen des in der Fig. 1 vorgegebenen Temperaturprofils zu ermitteln.

Der vorliegenden Erfindung liegt daher das Problem zu Grunde, eine Vorrichtung anzugeben, mit der die oben diskutierten Nachteile zum Nachbilden eines vorgegebenen Lötprofils zumindest zum Teil vermieden werden können.

### 3. Zusammenfassung der Erfindung

Gemäß einem Ausführungsbeispiel der vorliegenden Erfindung wird dieses Problem durch eine Vorrichtung nach Anspruch 1 gelöst.

Eine erfindungsgemäße Vorrichtung ermöglicht es, den Temperaturverlauf des Lötguts während des gesamten Lötvorgangs im Wesentlichen direkt zu messen. Insbesondere macht es eine erfindungsgemäße Vorrichtung möglich, im Wesentlichen den Temperaturanstieg von der Ausgangstemperatur bis zu der Löttemperatur unmittelbar zu verfolgen. Dabei ist von besonderer Bedeutung, dass eine erfindungsgemäße Vorrichtung den Durchsatz einer Dampfphasen-Lötanlage vorzugsweise nicht beeinträchtigt.

Ausführungsbeispiele der erfindungsgemäßen Vorrichtung vermeiden es, dass ein Temperatursensor bei jedem Lötvorgang manuell an einer zu lötenden Baugruppe befestigt werden muss, beispielsweise mit einer Klammer. Dadurch wird die Gefahr beseitigt, dass bei dem Befestigungsvorgang Bauelemente verschoben werden können und/oder der Temperatursensor in keinen zuverlässigen oder einen schlechten thermischen Kontakt mit der Leiterplatte der zu lötenden Baugruppe gebracht werden kann. Das Befestigungsproblem des Temperatursensors wird häufig bei dicht gepackten Baugruppen dadurch verschärft, dass es schwierig ist, eine geeignete Stelle zum Anbringen des Temperatursensors zu finden.

Aufgrund der spezifischen Messbedingungen in der Dampfdecke und / oder am Rand der Dampfdecke führt das Anordnen eines Temperatursensors in der Nähe der zu lötenden Baugruppe - wodurch das aufwändige Befestigen des Temperatursensors an der Leiterplatte vermieden werden kann - nicht zu reproduzierbaren Messergebnissen. Ein Referenzelement einer erfindungsgemäßen Überwachungsvorrichtung beseitigt beide Probleme.

Indem die oben angegebene Überwachungsvorrichtung eine zuverlässige Messung des Temperaturverlaufs des Lötguts ermöglicht, stellt sie die Ist-Größe für eine optionale Regelung des Lötprofils bereit, wie es etwa in der Fig. 1 angegeben ist. Durch Vergleich mit der Soll-Größe, nämlich mit einem vorgegebenen Lötprofil und durch Einwirkung auf eine Heizung und / oder Kühlung der Dampfphasen-Lötanlage, macht eine erfindungsgemäße Überwachungsvorrichtung den Aufbau einer geschlossenen Regelschleife zum Nachbilden eines Lötprofils möglich.

Eine Steuerung eines Temperaturgradienten in einer Dampfphasen-Lötanlage nach dem Stand der Technik ist hingegen blind gegenüber externen Prozesseinflüssen wie etwa unterschiedlichen Erwärmungseigenschaften von Basismaterialien und/oder für variierende Produktionsbedingungen im Batch-Betrieb, wie etwa eines kalten oder heißen Trägers des Lötguts. Ferner ist eine solche Steuerung ebenfalls blind gegenüber einer unterschiedlichen Beladung einer Dampfphasen-Lötanlage. Das Aufheizen des Lötguts unter der Kontrolle einer geschlossenen Regelschleife beseitigt diese Probleme.

Eine erfindungsgemäße Überwachungsvorrichtung kann problemlos in eine neue Dampfphasen-Lötanlage integriert werden. Bereits im Betrieb befindliche Dampfphasen-Lötanlagen können ohne Schwierigkeit mit einer erfindungsgemäßen Überwachungsvorrichtung nachgerüstet werden.

In einem weiteren Aspekt weist das Referenzelement eine Materialzusammensetzung und/oder einen Aufbau auf, der im Wesentlichen einer Materialzusammensetzung und/oder dem Aufbau des Lötguts entspricht.

Für den Fall, dass das Referenzelement die Leiterplatte der zu lötenden Baugruppe umfasst, muss das Referenzelement nicht eigens für seine Funktion präpariert werden. Vor dem eigentlichen Heizprozess muss lediglich einmalig eine Messvorrichtung auf dem Referenzelement befestigt werden.

Gemäß einem weiteren Aspekt umfasst das Referenzelement ein elektrisch isolierendes Basismaterial einer Leiterplatte, wobei das Wärmeleitvermögen des Referenzelements durch eine Wahl einer Dicke des Basismaterials der Leiterplatte und/oder durch eine geeignete Anzahl von Bohrungen durch das Basismaterials auf das Wärmeleitvermögen des Lötguts abstimmbar ist.

Eine Leiterplatte weist häufig ein elektrisch isolierendes Basismaterial auf, dem einseitig oder beidseitig alternierend eine Vielzahl von elektrisch leitfähigen und elektrisch isolierenden Schichten aufgebracht wird. Bei einer derartigen Leiterplatte besteht bei einer Vielzahl von Heiz- und Kühlzyklen die Gefahr, dass die Leiterplatte delaminieren könnte. Wird nur das Basismaterial selber als Referenzelement eingesetzt, kann diese Gefahr vermieden werden. Um das Wärmeleitvermögen des Basismaterials an das Wärmeleitvermögen der Leiterplatte des Lötguts anzupassen, stehen zumindest zwei Parameter zur Verfügung. Zum einen kann die Dicke des Basismaterials geeignet gewählt werden und/oder kann die Oberfläche des Basismaterials durch eine entsprechende Anzahl von Bohrungen eingestellt werden. Die Präparation des Referenzelements erfolgt einmalig vor Beginn des eigentlichen Lötprozesses.

Nach einem anderen Aspekt umfasst das elektrisch isolierende Basismaterial der Leiterplatte des Referenzelements ein elektrisch isolierendes Basismaterial einer Leiterplatte des Lötguts.

Als Referenzelement kann das Basismaterial einer beliebigen Leiterplatte verwendet werden. Der Einsatz des Basismaterials der Leiterplatte des Lötguts als Referenzelement erleichtert die Anpassung des Wärmeleitvermögens des Referenzelements an das Wärmeleitvermögen des Lötguts.

Nach noch einem weiteren Aspekt ist eine Wärmekapazität des Referenzelements einen Faktor zehn kleiner, bevorzugt einen Faktor 30 kleiner und am meisten bevorzugt einen Faktor 100 kleiner als eine Wärmekapazität des Lötguts.

In Spezialfällen - beispielsweise beim Löten einer sehr geringen Stückzahl identischer Baugruppen - kann es sinnvoll sein als Referenzelement eine Leiterplatte des Lötguts zu verwenden. In diesem Fall weist das Referenzelement die gleiche Wärmekapazität wie das Lötgut auf. Diese Leiterplatte wird einmalig vor Beginn der Lötprozesse präpariert und steht sodann für die benötigte Anzahl von Lötvorgängen zur Verfügung. Bei gleicher Heizleistung verringert dies den Temperaturanstieg in dem Zeitintervall zwischen t₂ und t₃ auf im Wesentlichen die Hälfte. Im Gegenzug macht dies die Interpretation der Messergebnisse besonders einfach. Bei kleinen Baugruppen von denen mehrere oder viele gleichzeitig gelötet werden, ist es ausreichend die Leiterplatte einer einzigen Baugruppe als Referenzelement zu verwenden, die einmalig für viele Lötprozesse präpariert wird. Der Einfluss der Überwachungsvorrichtung auf die Energiebilanz sinkt dadurch deutlich. Alternativ kann ein Referenzelement eingesetzt werden, dessen Wärmekapazität im einstelligen Prozentbereich des Lötguts liegt, wodurch der Einfluss der oben beschriebenen Überwachungseinrichtung auf die Energiebilanz des Lötprozesses auf eine vernachlässigbare Größe verringert werden kann.

Die untere Grenze der Wärmekapazität des Referenzelements wird dadurch bestimmt, dass die Messvorrichtung der Überwachungsvorrichtung den Temperaturverlauf der zu lötenden Baugruppe reproduzierbar messen kann. Andererseits sollte - wie oben beschrieben - die obere Grenze der Wärmekapazität des Referenzelements vorzugsweise so gewählt werden, dass die Energieeffizienz der Dampfphasen-Lötanlage und/oder deren Durchsatz nicht signifikant beeinträchtigt wird.

Bei großflächigen Baugruppen ist ein Ausschnitt der Leiterplatte als Referenzelement möglich. Damit ist das Verhältnis des Wärmeleitvermögens von Lötgut und Referenzelement näherungsweise bekannt.

Da das Wärmeleitvermögen des Lotguts über einen großen Bereich variieren kann, kann es sinnvoll sein, eine Reihe von Referenzelementen vorzubereiten, die auf das Wärmeleitvermögen des jeweiligen Lötguts abgestimmt sind. Maßgeblich für die Funktion des Referenzelements ist jedoch weniger seine Materialzusammensetzung bzw. sein Aufbau und seine Wärmekapazität sondern vielmehr sein Wärmeleitvermögen im Vergleich zu der des Lötguts. Deshalb kann das Referenzelement ein beliebiges Material aufweisen, das die Anforderungen im Hinblick auf das Wärmeleitvermögen erfüllt. Ferner ist die Geometrie des Referenzelements von untergeordneter Bedeutung. Bevorzugt ist die Form eines Quaders mit einer großen Grundfläche und geringer Höhe, da das Lötgut in der Regel diese Form aufweist.

In einem weiteren bevorzugten Aspekt ist die Aufnahme ausgebildet, um das Referenzelement während eines Aufheizvorgangs in der Dampfphasen-Lötanlage im Wesentlichen auf einer gleichen Höhe wie das Lötgut anzuordnen. Das kontrollierte Erwärmen des Lötguts in dem Intervall t₁ bis t₂ findet an der Oberkante der Dampfdecke statt. Aus diesem Grund ist es bevorzugt, dass das Referenzelement im Wesentlichen auf der gleichen Höhe wie das Lotgut angeordnet wird, damit das Lotgut und das Referenzelement die im Wesentlichen die gleiche Temperatur aufweisen. Dabei bedeutet hier - wie auch an anderen Stellen der Beschreibung - "im Wesentlichen" eine Angabe eines Zahlenwerts von Messdaten innerhalb der in der Fachwelt üblichen Fehler- und Produktionstoleranzen.

Gemäß einem weiteren Aspekt ist die Kühlvorrichtung ausgebildet, um das Referenzelement während des Entladens des Lötguts und/oder des Beladens eines neuen Lötguts zu kühlen.

Nach einem weiteren Aspekt ist die Kühlvorrichtung vorzugsweise ausgebildet, um die Temperatur des Referenzelements in Wesentlichen auf die Temperatur abzukühlen, die das Lötgut am Beginn des Aufheizvorgangs aufweist.

Am Ende des Aufheizvorgangs, d.h. zum Zeitpunkt t₅ in der Fig. 1 weist das Referenzelement die Lottemperatur T₃ auf. Es wird bei t₅ zusammen mit dem Lötgut aus der Dampfdecke gefahren. Das heiße Lötgut wird von der Transportvorrichtung in der Prozesskammer entnommen und durch kaltes, neu zu lötendes Lötgut ersetzt. Im nächsten Schritt wird das neue Lötgut in die Dampfdecke abgesenkt. Damit die Überwachungsvorrichtung die Temperatur des neuen Lötguts über den gesamten Aufheizvorgang messen kann, ist es vorteilhaft, wenn dessen Referenzelement die Temperatur des neuen Lötguts, d.h. im Wesentlichen Raumtemperatur aufweist.

Die Ent- und Beladezeit des Lötguts wird möglicherweise nicht ausreichen, um die Temperatur des Referenzelements durch Konvektionskühlung auf Raumtemperatur abzusenken. Um den Durchsatz der Dampfphasen-Lötanlage nicht durch eine Wartezeit zu verringern, wird das Referenzelement während des Entladens und Beladens des Lötguts mit Hilfe einer Kühlvorrichtung bevorzugt aktiv gekühlt.

In noch einem weiteren Aspekt kühlt die Kühlvorrichtung das Referenzelement durch Aufbringen einer Flüssigkeit, die zum Löten verdampft wird.

Damit wird es möglich, ein einziges Medium sowohl zum Erwärmen als auch zum Kühlen einzusetzen. Die Ausführungsform ist konstruktiv besonders einfach und hat zudem dem Vorteil, dass eine Verunreinigung der Prozessflüssigkeit durch das Kühlmedium nicht auftreten kann.

Nach einem anderen Aspekt entnimmt die Kühlvorrichtung die Flüssigkeit einem Filterkreislauf der Dampfphasen-Lötanlage.

Dampfphasen-Lötanlagen weisen häufig eine Filtriervorrichtung zum Reinigen der Prozessflüssigkeit auf. Wie in der Gebrauchsmusterschrift DE 20 2009 014 590 U1 der Anmelderin beschrieben, muss die Prozessflüssigkeit zum Reinigen mittels eines Filtriersystems abgekühlt werden. Diese Ausführungsform der Kühlvorrichtung weist deshalb zwei vorteilhafte Gesichtspunkte auf. Zum einen ist Kühlflüssigkeit gereinigt und kann damit keine Verunreinigung in die Prozessflüssigkeit einschleppen und zum anderen ist die Kühlflüssigkeit beim Eintritt in die Kühlvorrichtung bereits kalt oder zumindest abgekühlt, wodurch der Aufwand für eine separate Kühleinrichtung eingespart oder zumindest deutlich verringert werden kann.

Im Hinblick auf den Kühlvorgang des Referenzelements ist es vorteilhaft, wenn das Referenzelement eine möglichst geringe Wärmekapazität aufweist.

Nach einem anderen Aspekt weist die Überwachungsvorrichtung ferner eine Vorrichtung zum automatischen Wechseln des Referenzelements auf.

In einer alternativen Ausführungsform weist die Überwachungsvorrichtung eine Anzahl identischer Referenzelemente auf. Vorzugsweise ist dabei jedes Referenzelement mit einer eigenen Messvorrichtung fest verbunden. Nach jedem Lötprozess wird das heiße Referenzelement durch ein abgekühltes Referenzelement ersetzt. Das Kühlen der Referenzelemente erfolgt dabei ähnlich wie das der gelöteten Baugruppen. Diese Ausführungsform benötigt keine Kühlvorrichtung für das Referenzelement.

In einem weiteren bevorzugten Aspekt weist eine Überwachungsvorrichtung ferner eine Regelung auf, die ausgebildet ist, eine Heizung und / oder eine Kühlung einer Dampfphasen-Lötanlage in Abhängigkeit von der mit der Messvorrichtung gemessenen Temperatur zu regeln.

Nach einem anderen bevorzugten Aspekt weist eine Überwachungsvorrichtung weiterhin ein Speichermedium auf, das ein vorgegebenes Temperaturprofil zumindest eines Aufheizvorgangs für das Lötgut speichert. Die Regelung ist vorzugsweise ausgebildet, den Temperaturverlauf des Lötguts gemäß dem gespeicherten Temperaturprofil zu regeln.

Eine oben definierte Überwachungsvorrichtung erlaubt es, den Temperaturverlauf des Lötguts während der Aufheizphase und Lötphase zu messen. Mit dem gemessenen Temperaturverlauf ist die Ist-Größe eines Lötprozesses bekannt. Durch Vergleich der Ist-Größe mit einem vorgegeben Temperaturprofil (Soll-Größe) kann eine mögliche Abweichung der beiden Größen bestimmt werden. Falls eine Differenz festgestellt wird, wird so auf die Heizung und/oder die Kühlung der Dampfphasen-Lötanlage eingewirkt, dass die Differenz minimiert wird. Der Aufbau einer geschlossenen Regelschleife mit Hilfe einer beschriebenen Überwachungsvorrichtung beseitigt einen Großteil der im zweiten Abschnitt dargestellten Probleme.

In einem weiteren Aspekt der vorliegenden Erfindung ist eine Dampfphasen-Lötanlage im Anspruch 13 definiert, die zumindest eine Überwachungsvorrichtung nach einem der oben dargelegten Aspekte aufweist.

Die Erfindung definiert weiter ein Verfahren zum Überwachen einer Dampfphasen-Lötanlage entsprechend Anspruch 14.

### 4. Beschreibung der Zeichnungen

In der folgenden detaillierten Beschreibung werden derzeit bevorzugte Ausführungsbeispiele der Erfindung unter Bezugnahme auf die Zeichnungen beschrieben, wobei
- Fig. 1: eine schematische Darstellung eines Lötprofils für ein Bauteil einer Baugruppe darstellt;
- Fig. 2: einen schematischen Schnitt durch eine Prozesskammer einer Dampfphasen-Lötanlage, eine zu lötende Baugruppe und ein Beispiel einer Überwachungsvorrichtung zeigt;
- Fig. 3: die Fig. 2 wiedergibt, wobei die Baugruppe und das Referenzelement in eine Dampfdecke über der in der Prozesskammer siedenden Prozessflüssigkeit eingetaucht sind;
- Fig. 4: die Fig. 3 nach Beendigung des Lötvorgangs repräsentiert, wobei das Referenzelement durch die Kühlvorrichtung gekühlt wird;
- Fig. 5: im oberen Teilbild die Abbildung von drei Referenzelementen wiedergibt und im unteren Teilbild schematische Aufsichten und Seitenansichten der drei Referenzelemente des oberen Teilbilds zeigt;
- Fig. 6: eine gemessene Kühlkurve des ersten Referenzelements darstellt;
- Fig. 7: eine gemessene Kühlkurve des zweiten Referenzelements zeigt;
- Fig. 8: eine gemessene Kühlkurve des dritten Referenzelements wiedergibt;
- Fig. 9: eine gemessene Kühlkurve des dritten Referenzelements zeigt, die mit einer gegenüber der Fig. 8 verdoppelten Menge der Kühlflüssigkeit gekühlt wurde; und
- Fig. 10: schematisch das Nachbilden des Temperaturanstiegs des Lötprofils der Fig. 1 beim Einsatz einer Überwachungsvorrichtung und einer geschlossenen Regelschleife veranschaulicht.

### 5. Detaillierte Beschreibung bevorzugter Ausführungsbeispiele

Im Folgenden werden bevorzugte Ausführungsformen der erfindungsgemäßen Vorrichtung genauer erläutert.

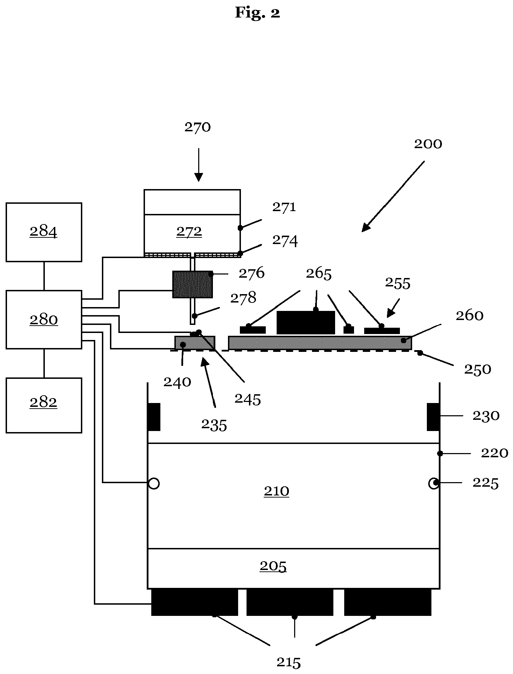

Die Fig. 2 zeigt schematisch einen Schnitt durch eine Prozesskammer 220 einer Dampfphasen-Lötanlage 200, in die eine Überwachungsvorrichtung 235 integriert ist. Die Prozessflüssigkeit 205 füllt die Prozesskammer 220 bis zu einer bestimmten Höhe. In einer häufig gewählten Ausführungsform weist die Prozessflüssigkeit 205 eine Höhe von etwa einem Zentimeter auf. Die Prozessflüssigkeit 205 ist vorzugsweise chemisch inert und elektrisch nicht leitend. Als Prozessflüssigkeit 205 kann beispielsweise Perfluoropolyether oder eine Flüssigkeit eingesetzt werden, die bei einer vorgegebenen Temperatur siedet. Die Prozessflüssigkeit 205 wird so gewählt, dass ihr Siedepunkt der Löttemperatur der zu lötenden Baugruppe 255 oder dem Lötgut 255 entspricht.

Mit einer Heizvorrichtung 215, die sich in dem in der Fig. 2 dargestellten Beispiel aus drei Elementen zusammensetzt und unterhalb der Prozesskammer 220 angeordnet ist, wird die Prozessflüssigkeit 205 zunächst bis zu ihrem Siedepunkt erwärmt. Bei weiterer Energiezufuhr in die siedende Prozessflüssigkeit 205 steigt deren Temperatur nicht weiter an, sondern die Prozessflüssigkeit 205 verdampft. Der entstehende Dampf bildet eine Dampfdecke 210 über der Prozessflüssigkeit 205. Ein Teil des Dampfes kondensiert an den kalten Seitenwänden der Prozesskammer 220 und erwärmt diese. Bei genügender Energiezufuhr durch die Heizvorrichtung 215 steigt die Dampfdecke 210 in der Prozesskammer 220 nach oben und erreicht schließlich die Oberkante der Prozesskammer 220. Bei einem weiteren Anstieg der Dampfdecke 210 über die Oberkante der Prozesskammer 220 würde es zu einem Verlust der teueren Prozessflüssigkeit 205 aus der Prozesskammer 220 hinaus kommen. Um dies zu verhindern, ist an der Oberkante der Prozesskammer 220 vorzugsweise eine zweite Kühleinrichtung 230 angebracht, an der, wie in der Fig. 2 dargestellt, der Dampf 210 kondensiert, der das obere Ende der Prozesskammer 220 erreicht.

In der Höhe, in der das Lötgut 255 in der Prozesskammer 220 erwärmt wird, ist in der beispielhaften Ausführungsform der Fig. 2 eine erste Kühlvorrichtung 225 in der Prozesskammer 220 angebracht. Die Kühleinrichtung 225 umfasst in der einfachsten Ausführung ein Rohr, das entlang einer oder mehrerer Seitenwände an der Prozesskammer 220 angebracht ist. In einer alternativen Ausführungsform weist die Kühleinrichtung 225 mehrere übereinander liegende Rohre auf, durch die einzeln oder in Kombination Kühlmittel geleitet werden kann. In einer weiteren alternativen Ausführungsform kann die Kühleinrichtung 225 in der Höhe variabel an zumindest einer Seitenwand der Prozesskammer 220 angebracht sein.

Durch kontrolliertes Durchführen eines Kühlmittels durch die Kühleinrichtung 225 wird diese unterhalb die Siedetemperatur der Prozessflüssigkeit 205 abgekühlt und somit die Höhe der Dampfdecke 210 eingestellt. An das Kühlmedium werden keine besonderen Anforderungen gestellt, da es nicht in direkten Kontakt mit dem Dampf 210 in der Prozesskammer 220 kommt. Als einfache Kühlmedien können Gase verwendet werden, wie etwa Luft, da diese in der Kühleinrichtung 225 auch bei hohen Temperaturen über 200 °C keinen Phasenübergang durchführen.

Das Lötgut 255 oder die Baugruppe 255 ist zusammen mit dem Referenzelement 240 auf einer Aufnahme 250 angeordnet. Mit Hilfe der Aufnahme 250 bzw. einer Transportvorrichtung, mit der die Aufnahme 250 verbunden ist, kann die Baugruppe 255 zusammen mit dem Referenzelement 240 in die Prozesskammer 220 abgesenkt und wieder aus ihr herausgehoben werden (in der Fig. 2 nicht dargestellt). Die Baugruppe 255 umfasst eine Leiterplatte 260 und verschiedene Bauelemente 265. Weder an die Leiterplatte 260 noch an die zu lötenden Bauelemente werden besondere Anforderungen gestellt. Das in der Fig. 2 dargestellte Beispiel zeigt eine einseitig bestückte Baugruppe 255. Eine Überwachungsvorrichtung 235 kann auch zum Überwachen des Lötvorgangs von beidseitig bestückten Baugruppen eingesetzt werden.

Auf dem Referenzelement 240 ist eine Temperaturmessvorrichtung 245 angebracht. Die Temperaturmessvorrichtung 245 kann beispielsweise ein Thermoelement oder ein Thermistor sein. Bei der Montage einer Temperaturmessvorrichtung 245 ist darauf zu achten, dass die Zuleitungsdrähte nicht blank liegen; dadurch könnte die Messung der Temperatur des Referenzelements 240 verfälscht werden. Die thermische Verbindung zwischen dem Referenzelement 240 und der Temperaturmessvorrichtung 245 muss auch nach vielen Lötzyklen, d.h. vielen Aufheiz- und Abkühlvorgängen zuverlässig funktionieren. Deshalb kann das Referenzelement 240 eine Aufnahme vorsehen, in die die Temperaturmessvorrichtung 245 positioniert wird ist (in der Fig. 2 nicht gezeigt). Die Verbindung zwischen Referenzelement 240 und Temperaturmessvorrichtung 245 kann beispielsweise durch Klemmen, Schrauben und/oder Kleben erfolgen.

In dem Beispiel der Fig. 2 ist die Temperaturmessvorrichtung 245 drahtgebunden mit einem Computersystem 280 verbunden. Die Temperaturmessvorrichtung 245 kann jedoch auch ihre Messdaten einer Auswerteeinheit, wie etwa dem Computersystem 280 bereitstellen, bzw. das Computersystem 280 kann die Messdaten von der Temperaturmessvorrichtung 245 abfragen. Darüber hinaus ist es ferner denkbar, das Referenzelement 240 als einen Sensor auszubilden, der von einer beispielsweise als Wärmebildkamera oder Bolometer ausgebildeter Temperaturmessvorrichtung 245 abgefragt wird.

In dem in der Fig. 2 dargestellten Beispiel umfasst das Referenzelement 240 einen Ausschnitt aus der Leiterplatte 250 des Lötguts 255. Dabei muss der Ausschnitt der Leiterplatte 250, der als Referenzelement 240 eingesetzt wird, nicht mit Bauelementen 265 bestückt sein. Bei kleinen Leiterplatten, die im Nutzen verlötet werden, kann beispielsweise einfach eine Leiterplatte 250 als Referenzelement 240 eingesetzt werden. Ferner kann anstelle einer kompletten Leiterplatte das Basismaterial einer Leiterplatte als Referenzelement eingesetzt werden. Dabei wird das Wärmeleitvermögen des Basismaterials, wie im zweiten Abschnitt beschrieben, an die thermische Leitfähigkeit der Leiterplatte angepasst.

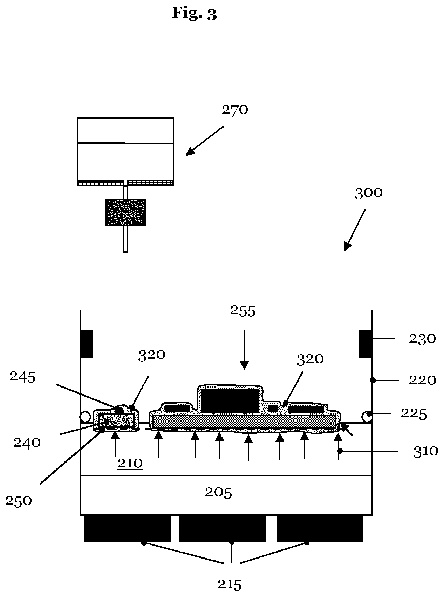

Wie bereits im dritten Abschnitt ausgeführt, ist es unvorteilhaft in jedem Lötzyklus eine Temperaturmessvorrichtung 245 mit dem Lötgut 255 zu verbinden. Der feste Einbau einer Temperaturmessvorrichtung 245 alleine in der Nähe des Lötguts 255 führt aufgrund der spezifischen Prozessbedingungen im Grenzbereich der Dampfdecke 210 zu keinen reproduzierbaren Ergebnissen beim Messen der Temperatur des Lötguts 255. Dieser Umstand hat eine mangelnde Prozesskonstanz zu Folge. Dieser Zusammenhang wird nachfolgend anhand der Fig. 3 weiter ausgeführt.

Die wesentliche Funktion des Referenzelements 240 ist es, für die Temperaturmessvorrichtung 245 ein dem Lötgut 255 vergleichbares Wärmeleitvermögen zur Verfügung zu stellen, so dass die mit der Messvorrichtung 245 ermittelten Temperaturen reproduzierbar den Temperaturen des Lötguts 255 oder der Baugruppe 255 entsprechen. Da das Wärmeleitvermögen der zu lötenden Baugruppen über einen großen Bereich variieren kann, ist sinnvoll eine Reihe von Referenzelementen 240 bereitzustellen, deren Wärmeleitvermögen auf das jeweilige Wärmeleitvermögen des Lötguts 255 abgestimmt ist. Vorzugsweise sollte das Wärmeleitvermögen des Referenzelements 240 innerhalb eines Bereichs von 70% bis 130% und besonders bevorzugt von 90% bis 110% des Wärmeleitvermögens des Lötguts betragen.

Der Einsatz eines Referenzelements 240 mit einer Wärmekapazität, die größer oder sogar deutlich größer als die minimal benötigte Wärmekapazität ist, beeinträchtigt die Messung des Temperaturverlaufs des Lötguts 255 mit der Temperaturmessvorrichtung 245 nicht. Er kann jedoch durch das Aufheizen und Abkühlen unnötig großer thermischer Massen, die Wirtschaftlichkeit des Lötprozesses beeinflussen. Darüber hinaus kann in diesem Fall das Referenzelement 240 unnötig Platz belegen, der nicht mit Lötgut 255 befüllt werden kann.

Wie in der Fig. 2 illustriert, ist es für eine Überwachungsvorrichtung 235 günstig, wenn das Referenzelement 240 eine äußere Form aufweist, die der Form der Leiterplatte 260 nahekommt. Es ist jedoch nicht notwendig, dass das Referenzelement 240 die Form eines Quaders mit einer geringen Höhe aufweist. Es ist jedoch auch möglich andere geometrische Formen für das Referenzelement 240 zu wählen, wie etwa eine Kreisscheibe oder eine Kugel.

Vorzugsweise entspricht die Materialzusammensetzung des Referenzelements 240 der der Leiterplatte 260 des Lötguts 255. Dadurch wird sichergestellt, dass sich das Referenzelement 240 während des Aufheizvorgangs sehr ähnlich wie das Lötgut verhält. Wie bereits oben ausgeführt, kann jedoch der Einsatz des Basismaterials einer Leiterplatte aus Gründen der Langzeitstabilität bevorzugt sein.

Wie bereits ausgeführt, ist für die Funktion der Überwachungsvorrichtung 235 das Wärmeleitvermögen des Referenzelements 240 in Relation zum Wärmeleitvermögen des Lötguts 255 von zentraler Wichtigkeit. Nach dieser Beziehung ist das Material oder die Materialzusammensetzung des Referenzelements 240 nicht entscheidend für seine Funktion. Somit muss das Referenzelement 240 nicht die Materialzusammensetzung der Leiterplatte 260 der Baugruppe 255 aufweisen. Vielmehr kann das Referenzelement 240 aus einem beliebigen Material oder einer Materialverbindung gefertigt werden und deren Abmessungen so gewählt werden, dass das so gefertigte Referenzelement 240 das geforderte Wärmeleitvermögen aufweist. Bei dieser Betrachtung wird vorausgesetzt, dass der Aufheizvorgang in der Prozesskammer 220 der Dampfphasen-Lötanlage 200 so langsam erfolgt, dass innerhalb des Referenzelements 240 keine signifikanten Temperaturunterschiede auftreten. Vielmehr dominiert die aus dem Dampf 210 in den das Referenzelement 240 einhüllenden Flüssigkeitsfilm kondensierende Wärmemenge den Erwärmungsprozess.

Wie in der Fig. 2 dargestellt, ist das Referenzelement 240 auf der Aufnahme 250 in der gleichen Höhe wie die zu lötende Baugruppe 255 angeordnet. Wie aus der Fig. 3 zu ersehen ist, "sieht" ein Referenzelement 240 das oberhalb des Lötguts 255 angeordnet ist, nicht die Temperatur des Lötguts 255 und die Temperaturmessvorrichtung 245 der Überwachungsvorrichtung 235 misst eine Temperatur, die geringer ist als die Temperatur des Lötguts 255. Falls das Referenzelement 240 unterhalb des Lötguts 255 angebracht ist, beeinflusst das Referenzelement 240 zum einen den Erwärmungsvorgang und bestimmt andererseits ebenfalls nicht den Temperaturverlauf des Lötguts 255.

Die in der Fig. 2 beispielhaft dargestellte Überwachungseinrichtung 235 umfasst als wesentliche Komponenten die Aufnahme 250, das Referenzelement 240 und die Temperaturmessvorrichtung 245.

Wie bereits im dritten Abschnitt angesprochen, reicht in der Regel die Kühlung aufgrund von Konvektion während des Entladens des gelöteten Lötguts 445 und des Beladens des neu zu lötenden Lötguts 455 nicht aus, um das Referenzelement 240 auf die Ausgangstemperatur des neuen Lötguts 445 abzukühlen. Wird mit dem Einfahren des neuen Lötguts 455 in die Prozesskammer 220 gewartet bis das Referenzelement 240 durch Konvektion im Wesentlichen auf die Ausgangstemperatur des neuen Lötguts 455 abgekühlt ist, reduziert dies den Durchsatz der Dampfphasen-Lötanlage 200 auf ein wirtschaftlich nicht zu vertretendes Maß. Das Einbringen des Lötguts in die Dampfdecke 210 der Prozesskammer 220 mit heißem Referenzelement 240 macht die Temperaturmessvorrichtung 245 für den Temperaturbereich "blind", der unterhalb der aktuellen Temperatur des Referenzelements 240 liegt. Damit kann einerseits zum Beispiel ein bereits diskutierter Eintauchpeak nicht gemessen werden und andererseits kann beispielsweise der Gradient des Temperaturanstiegs in dem Intervall t1 bis t2 und/oder die Höhe T2 und die Zeitdauer t2 bis t3 des Temperaturplateaus in der Fig. 1 nicht zuverlässig detektiert werden. Um eine Regelung für den Temperaturverlauf bis zur Löttemperatur mit Hilfe der Überwachungsvorrichtung 235 aufbauen zu können, muss das Referenzelement 240 am Beginn des Lötprozesses im Wesentlichen die Temperatur des Lötguts 255, 455 aufweisen.

Um das Kühlen des Referenzelements 240 am Ende des Lötvorgangs zu beschleunigen, weist deshalb die Dampfphasen-Lötanlage 200 der Fig. 2 eine Kühl- und Dosiervorrichtung 270 auf. In einem Behälter 271 ist Kühlflüssigkeit 272 gespeichert. In dem Beispiel der Fig. 2 ist die Kühlflüssigkeit 272 die erwähnte Perfluroployether-Flüssigkeit und unterscheidet sich von der Prozessflüssigkeit 205 ausschließlich in der Temperatur.

Neben der Prozessflüssigkeit können andere Flüssigkeiten zum Kühlen des Referenzelements 240 eingesetzt werden, wie beispielsweise Wasser. Wird eine andere Flüssigkeit eingesetzt, so wird unterhalb des Referenzelements 240 eine Auffangwanne angeordnet, die die von dem Referenzelement 240 abtropfende Kühlflüssigkeit 272 auffängt (in der Fig. 2 nicht gezeigt). Dadurch wird ein Einschleppen der Kühlflüssigkeit 272 in die Prozessflüssigkeit 205 weitgehend vermieden. Alternativ kann das Kühlen des Referenzelements 240 außerhalb der Prozesskammer 220 erfolgen (in der Fig. 2 ebenfalls nicht dargestellt).

Neben Flüssigkeiten können zum Kühlen des Referenzelements 240 auch ein Gas oder eine Kombination aus Gasen eingesetzt werden (nicht in Fig. 2 gezeigt). Gase haben den Vorteil, dass sie im Wesentlichen nicht in die Prozessflüssigkeit 205 eingeschleppt werden. Auf der anderen Seite weisen Gase in der Regel deutlich geringere Wärmeleitfähigkeiten, Wärmekapazitäten und Wärmeübergangskoeffizienten als Flüssigkeiten auf, so dass im Vergleich zu einer Flüssigkeit größere Mengen Gas für den Kühlprozess des Referenzelements 240 benötigt werden.

Ferner können Kontaktkälte, Kältestrahlung und/oder eine Kombination aus zwei oder mehreren Komponenten zum Kühlen des Referenzelements 240 verwendet werden.

Die Kühl- und Dosiervorrichtung 270 der Fig. 2 weist eine Kühlvorrichtung 274 auf, mit deren Hilfe die Kühlflüssigkeit 272 auf eine vorgegebene Temperatur gekühlt werden kann. Im einfachsten Fall umfasst die Kühlvorrichtung 274 eine in dem Vorratsbehälter angeordnete Kühlschlange, die von Wasser durchströmt wird (in der Fig. 2 nicht gezeigt). Darüber hinaus können die aus dem Stand der Technik bekannten Kühlverfahren in der Kühlvorrichtung 274 eingesetzt werden. Zudem kann die Kühlvorrichtung von dem Computersystem 280 kontrolliert werden.

In dem Beispiel der Fig. 2 weist der Boden des Vorratsbehälters 271 einen Auslass 278 auf. Das Dosierventil 276 kontrolliert die Menge an Kühlflüssigkeit 272, die den Vorratsbehälter 271 pro Zeiteinheit verlassen kann. Das Dosierventil kann ebenfalls unter der Kontrolle des Computersystems 280 stehen.

Die Prozessflüssigkeit 205 der Dampfphasen-Lötanlage 200 muss regelmäßig von Verunreinigungen gesäubert werden, die hauptsächlich durch das Lötgut 255 in die Prozessflüssigkeit eingebracht werden. Wie in der Gebrauchsmusterschrift DE 2009 014 590 U1 der Anmelderin beschrieben, muss die Prozessflüssigkeit 205 zu diesem Zweck auf eine Temperatur unterhalb von 100 °C abgekühlt werden. Wird die bereits abgekühlte und zudem gereinigte Prozessflüssigkeit 205 aus dem Permanentfiltersystem der Dampfphasen-Lötanlage 200 als Kühlflüssigkeit 272 zum Kühlen des Referenzelements 240 benutzt, so reduziert dies den Aufwand für die Kühlvorrichtung 274 der Kühl- und Dosiervorrichtung 270 erheblich. Überdies vermeidet die Verwendung der Prozessflüssigkeit 205 als Kühlflüssigkeit 272 für das Referenzelement 240 das Einschleppen von Verunreinigungen in die Prozessflüssigkeit 205.

In der in der Fig. 2 dargestellten beispielhaften Ausführungsform erhält das Computersystem 280 die Messdaten der Messvorrichtung 245 der Überwachungsvorrichtung 235. In dem Speicher 282 ist das Lötprofil des Lötguts 255 gespeichert, z.B. das in der Fig. 1 wiedergegebene Lötprofil. Damit kennt das Computersystem 280 sowohl die vorgegebene Soll-Kurve des Aufheizvorgangs als auch die gemessene Ist-Kurve des Aufheiz- oder Lötprofils und kann beide Kurven miteinander vergleichen. Bei Feststellen einer Abweichung kann das Computersystem 280 durch entsprechendes Einwirken auf die Heizung 215 und/oder die Kühlung 235 die vorhandene Abweichung verringern.

Die thermische Trägheit des Systems bestehend aus der Heizung 215, der Prozessflüssigkeit 210, der Dampfdecke 210 und dem Referenzelement 240 macht den Regelungsvorgang für das Lötprofil langsam. Falls das Lötprofil nur geringe Anforderungen an die Dynamik der Regelschleife stellt, kann die Regelung des Aufheizvorgangs durch Ändern der Leistung der Heizung 215 erfolgen.

Anderseits ist die thermische Trägheit der Kühleinrichtung 225 gering im Vergleich zu der thermischen Trägheit der Heizvorrichtung 215. Zudem wirkt die Kühlvorrichtung 225 direkt auf die Dampfdecke 210 ein. Deshalb ermöglicht das Einbauen der Kühlvorrichtung 225 das Aufbauen einer geschlossenen Regelschleife für schnellere Regelungsvorgänge im Vergleich zum Verwenden der Heizleistung der Heizung 215 als Stellgröße der Regelschleife. Alternativ kann die Kombination aus Heizleistung der Heizung 215 und der Kühlleistung der Kühlvorrichtung 225 als Stellgröße der Regelschleife verwendet werden.

Der Einsatz von Gasen, die eine geringe Wärmekapazität aufweisen, reduziert die thermische Trägheit oder die Nachlaufzeiten der Kühleinrichtung 225. Damit kann das Reagieren oder Ansprechen der Kühleinrichtung 225 auf die Vorgaben des Computersystems 280 nochmals gesteigert werden.

In einer weiteren Form der Prozessführung kann neben der Heizleistung eine Höhenverstellung der Aufnahme 250 in der Dampfdecke 210 als Stellgröße in der Regelung des Aufheizvorgangs eingesetzt werden. Ferner ist es denkbar, die Heizung 215, die Kühlvorrichtung 225 und die Höhenverstellung der Aufnahme in Kombination zum Regeln des Aufheizvorgangs einzusetzen.

Das Display 284 oder der Monitor 284 des Computersystems 280 zeigt die Daten der Messvorrichtung 245 an. Darüber hinaus kann das Display 284 das Lötprofil der Fig. 1 anzeigen und kann ebenfalls die Daten der Heizung 215 und der Kühlvorrichtung 225 angeben. Zudem kann das Display 284 als Touchscreen ausgebildet sein, der zur Dateneingabe und Kontrolle des Computersystems 280 benutzt werden kann.

Nachfolgend wird beispielhaft der Aufheizvorgang eines Lötprozesses, der schematisch in der Fig. 1 dargestellt ist, beschrieben. Die Ausgangstemperatur des Referenzelements 240 und des Lötguts beträgt 30 °C ± 5 °C. Die Zeitdauer t₁ bis t₄ in der Fig. 1, d.h. bis zum Erreichen der Löttemperatur T₃ (≈ 220 °C) beträgt etwa 90 s. Die Temperatur T₂ des Plateaus liegt im Wesentlichen bei 170 °C. Das Referenzelement 240 wird ausgesucht, dass sein Wärmeleitvermögen zu dem des Lötguts 255 passt. Der Startwert der Heizleistung wird anhand des Referenzelements 240 so gewählt, dass sich in etwa der Temperaturgradient in dem Intervall zwischen t₁ und t₂ ergibt.

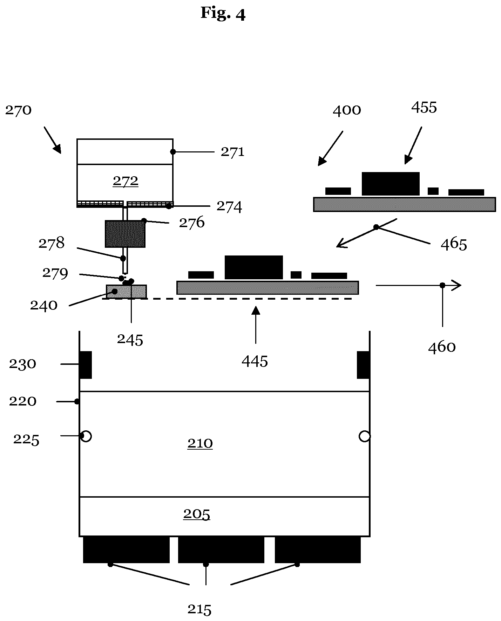

In den Figuren 3 und 4 sind aus Übersichtlichkeitsgründen das Computersystem 280 mit dem Speicher 282 und dem Monitor 284 sowie die Verbindungen zu der Überwachungsvorrichtung 235, der Heizung 215, der Kühlvorrichtung 225, dem Dosierventil 276 und der Kühlvorrichtung 274 unterdrückt.

Wie bereits oben erläutert, wird vor Beginn des Aufheizvorgangs des Lötguts 255 das Referenzelement 240 ausgewählt, dessen Wärmeleitvermögen zu dem Wärmeleitvermögen des auf der Aufnahme 250 vorhandenen Lötguts 255 passt. Auf diesem Referenzelement 240 wird die Temperaturmessvorrichtung 245 befestigt und das Referenzelement 240 wird - wie schematisch in der Fig. 2 gezeigt - neben dem Lötgut 255 auf der Aufnahme 250 platziert. Das Material des Referenzelements 240 wird ausgesucht, dass seine thermischen Eigenschaften den thermischen Eigenschaften des Lötguts nahekommen. Damit kann sichergestellt werden, dass die mit der Temperaturmessvorrichtung 245 an dem Referenzelement 240 ermittelte Temperatur im Wesentlichen der Temperatur des Lötguts 255 entspricht.

In einer alternativen Ausführung können die verschiedenen Referenzelemente bereits auf der Aufnahme 250 befestigt sein und auf dem zu dem vorhandenen Lötgut passenden Referenzelement 240 wird die Temperaturmessvorrichtung 245 befestigt. Es ist auch möglich, dass jedes der auf der Aufnahme 250 befestigten Referenzelemente 240 mit einer eigenen Temperaturmessvorrichtung 245 ausgestattet ist und bei einer drahtgebunden Übertragung der Messdaten nur die entsprechende Verbindung von der Temperaturmessvorrichtung 245 zu dem Computersystem 280 hergestellt werden muss. Bei drahtloser Übertragung der Messdaten aktiviert das Computersystem 280 die entsprechende Temperaturmessvorrichtung 245 des entsprechenden Referenzelements 240 bzw. fragt diese ab.

Der Prozess beginnt mit dem Absenken der Aufnahme 250 auf die Prozessposition. Zur Minimierung eines Eintauchpeaks kann die Höhe der Dampfdecke 210 kurzzeitig mit Hilfe der Kühlvorrichtung 225 auf das Niveau der Prozessposition abgesenkt werden. Beim Erreichen der Dampfdecke 210 kondensiert der Dampf 210 an dem Lötgut 255 und dem Referenzelement 240 und bildet einen dünnen geschlossenen Flüssigkeitsfilm 320 um das Lötgut 255 und das Referenzelement 240. Der Flüssigkeitsfilm 320 schützt das Lötgut 255 vor dem Einwirken oxydierender Substanzen, wie etwa dem Sauerstoff der Luft.

Die Leistung der Heizung 215 bildet aus der Prozessflüssigkeit 205 eine Dampfmenge 210, die näherungsweise proportional zur Heizleistung ist. Der gebildete Dampf kondensiert an dem Lötgut 255 und dem Referenzelement 240 und erwärmt beide Elemente gleichmäßig, so dass die Temperatur des Referenzelements 240 im Wesentlichen der Temperatur des Lötguts entspricht. Dies ist durch die Pfeile 310 in der Fig. 3 angedeutet.

Die auf dem Referenzelement 240 angebrachte Temperaturmessvorrichtung 245 misst den Temperaturanstieg und gibt die Messdaten an das Computersystem 280 weiter. Das Computersystem 280 vergleicht den vorgegebenen Temperaturanstieg - schematisch dargestellt in der Fig. 1 - mit dem von der Temperaturmessvorrichtung 245 der Überwachungseinrichtung 235 ermittelten Zahlenwert und regelt die Leistung der Heizung 215 oder deren Energieübertragungsrate zu höheren oder niedrigeren Werten, um eine festgestellte Abweichung des gemessenen Temperaturanstiegs des Lötguts 255 von dem in dem Speicher 282 abgelegten Temperaturanstieg zu minimieren.

Erreicht die gemessene Temperatur die Temperatur T₂ des Plateaus der Fig. 1 minus eines einstellbaren Temperatur-Offsets (beispielsweise 5 °C) regelt das Computersystem 280 die Energieübertragungsrate der Heizung 215 für den zweiten niedrigeren Temperaturgradienten in dem Zeitbereich von t₃ bis t₄. Damit in dem Zeitbereich zwischen t₂ und t₃ die Temperatur des Lötguts 255 und des Referenzelements 240 nicht weiter ansteigt, regelt das Computersystem 280 die Kühlvorrichtung 225, so dass diese die Dampfdecke 210 in dem Zeitbereich zwischen t₂ und t₃ unterhalb die Aufnahme 250 drückt.

Das Lötprofil der Fig. 1 zeigt, dass in dem Zeitintervall zwischen t₂ und t₃ die Temperatur des Lötguts 255 nicht ansteigen soll. Dieses Temperaturplateau T₂ oder diese Rampe wird in das Lötprofil eingeführt, um Baugruppen 255 auf denen Bauteile 265 mit deutlich unterschiedlichen Massen verbaut werden, während des Aufheizvorgangs die Möglichkeit zu geben, Temperaturdifferenzen auszugleichen.

Beim Erreichen des Zeitpunkts t₃ schaltet das Computersystem 280 die Kühlvorrichtung 225 ab und die zuvor neu eingestellte Energieübertragungsrate stellt den Startwert der Regelung für den zweiten Temperaturgradienten in den Intervall t₃ bis t₄ dar. Beim Erreichen der Löttemperatur T₃ schaltet das Computersystem 280 die Heizung 215 für den Zeitraum t₄ bis t₅, d.h. für das Zeitintervall über Liquidus, in den Nachheizmodus, der gerade die internen und externen Wärmeverluste kompensiert, ohne dass die Dampfdecke 210 allzu sehr ansteigt. Mit Erreichen des Zeitpunkts t₅ wird die Aufnahme 250 mit dem Lötgut 255 und dem Referenzelement 240 aus der Dampfdecke 210 gehoben. Der Transport der Aufnahme kann ebenfalls von dem Computersystem 280 gesteuert bzw. bei Vorhandensein einer entsprechenden Sensoreinrichtung geregelt werden.

In einer alternativen Prozessführung kann bei Erreichen der Temperatur T₂ - ΔT (Temperatur-Offset), die Heizung für eine Zeitperiode t₃ - t₂ ausgeschaltet werden, falls der Lötprozess eine größere Toleranz der Höhe des Temperaturplateaus T₂ und seiner Länge t₃ - t₂ zulässt. In einer weiteren alternativen Vorgehensweise kann im Intervall zwischen t₂ und t₃ die Aufnahme 250 aus der Dampfdecke 210 herausgehoben werden. Nach dem Verlassen der Dampfdecke 210 verdunstet der Flüssigkeitsfilm 320 von dem Lötgut 255 und dem Referenzelement 240.

Die Fig. 4 zeigt die Situation nachdem die Aufnahme 250, das gelötete Lötgut 445 und das Referenzelement 240 in die in der Fig. 2 dargestellte Ausgangsposition gebracht hat. Die gelötete Baugruppe 455 wird zur Kühlstation transportiert; dies ist in der Fig. 4 durch den waagrechten Pfeil 460 angedeutet. In der Kühlstation wird das Lötgut 455 durch Konvektion gekühlt. An den Abtransport der gelöteten Baugruppe 445 anschließend, wird eine neu zu lötende Baugruppe 455 auf der Aufnahme 250 angeordnet; in der Fig. 4 ist dies durch den schräg nach unten gerichteten Pfeil 465 symbolisiert.

Während dieses Be- und Entladevorgangs wird das Referenzelement 240 mit Hilfe kalter Kühlflüssigkeit 272 aus dem Vorratsbehälter 271 gekühlt. Dazu fließt durch das Dosierventil 276 kontrolliert eine definierte Menge Kühlflüssigkeit 272 auf das noch heiße Referenzelement 240. Das Dosierventil 276 kann wiederum durch das Computersystem 280 kontrolliert werden.

Der Temperaturverlauf des Kühlvorgangs des Referenzelements 240 wird wiederum durch die Messvorrichtung 245 gemessen, so der Kühlprozess des Referenzelements 240 ebenfalls von dem Computersystem 280 durch Einwirkung auf das Dosierventil 276 geregelt werden kann. Damit kann zum einen bestimmt werden, dass die Temperatur des Referenzelements 240 und die Temperatur der neu zu lötenden Baugruppe 455 im Wesentlichen übereinstimmen und zum anderen kann damit sichergestellt werden, dass der Kühlvorgang am Ende des Beladevorgangs der neu zu lötenden Baugruppe 455 abgeschlossen ist. Dadurch wird erreicht, dass das Kühlen des Referenzelements 240 den Durchsatz der Dampfphasen-Lötanlage 200 nicht vermindert.

Die Figuren 2 bis 4 zeigen eine mögliche Anordnung einer Kühlvorrichtung 270 einer Dampfphasen-Lötanlage, die im Batch-Betrieb arbeitet. Bei Dampfphasen-Lötanlagen, die nach dem Inline-Prinzip aufgebaut sind, wird die gesamte Zeit, in der das Referenzelement 240 gekühlt werden kann, zum Kühlen ausgenutzt. Die gesamte Zeit setzt sich aus den Anteilen zusammen: Transport der Aufnahme 250 aus der Dampfdecke 210, Abdampfen des Lötguts 445, Abtransport des gelöteten Lötguts 445 und Transport des neu zu lötenden Lötguts 455 in bzw. über die Prozesskammer 220. Dazu muss die Kühlvorrichtung 270 bzw. deren Auslauf 278 beweglich d.h. dem Transportsystem der Inline-Dampfphasen-Lötanlage folgend ausgeführt werden.

Die Ausführungen des vorhergehenden Abschnitts gelten in analoger Weise für Dampfphasen-Lötanlagen, die einen Vakuumlötprozess realisieren.

Anstelle eines aktiven Kühlvorgangs eines heißen Referenzelements 240 während des Ent- und Beladens des Lötguts 255, 445, 455 kann alternativ das heiße Referenzelement 240 automatisch gegen ein kaltes Referenzelement 240 ausgetauscht werden. Das heiße Referenzelement 240 kann ähnlich wie das heiße gelötete Lötgut 445 durch Konvektion gekühlt werden. Durch Vorhalten einer entsprechenden Anzahl identischer Referenzelemente 240 ist immer ein Referenzelement 240 vorrätig, dessen Temperatur der Ausgangstemperatur der zu lötenden Baugruppe 455 entspricht. Vorzugsweise weist jedes der identischen Referenzelemente 240 eine eigene Temperaturmessvorrichtung 245 auf, wodurch das Wechseln der Referenzelemente 245 während der Ent- und Beladezeit des Lötguts 255, 445, 455 den Durchsatz der Dampfphasen-Lötanlage nicht beeinträchtigt.

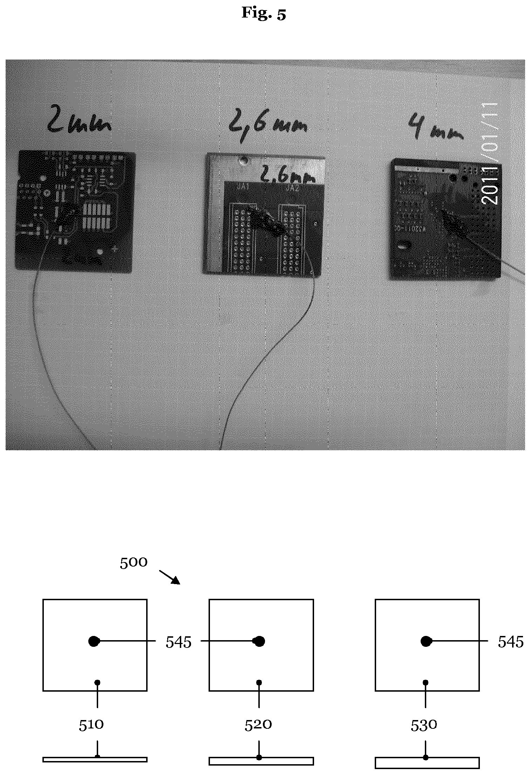

Die Anordnung 500 der Fig. 5 zeigt drei Referenzelemente 510, 520 und 530. Im oberen Teilbild sind Ausschnitte aus Leiterplatten dargestellt. In der Mitte des jeweiligen Leiterplattenausschnitts ist ein Thermoelement aufgeklebt. Im unteren Teilbild sind die drei Referenzelemente 510, 520 und 530 schematisch in Aufsicht (oben) und in Seitenansicht (unten) angegeben. Alle Referenzelemente 510, 520 und 530 haben eine Grundfläche von 50 mm × 50 mm. In der Mitte der Grundfläche ist eine Temperaturmessvorrichtung 545 in Form eines Thermoelements aufgeklebt. Das linke Referenzelement 510 weist eine Dicke von 2,0 mm auf, das mittlere Referenzelement 520 hat eine Dicke von 2,6 mm und das linke Referenzelement 530 ist 4,0 mm dick.

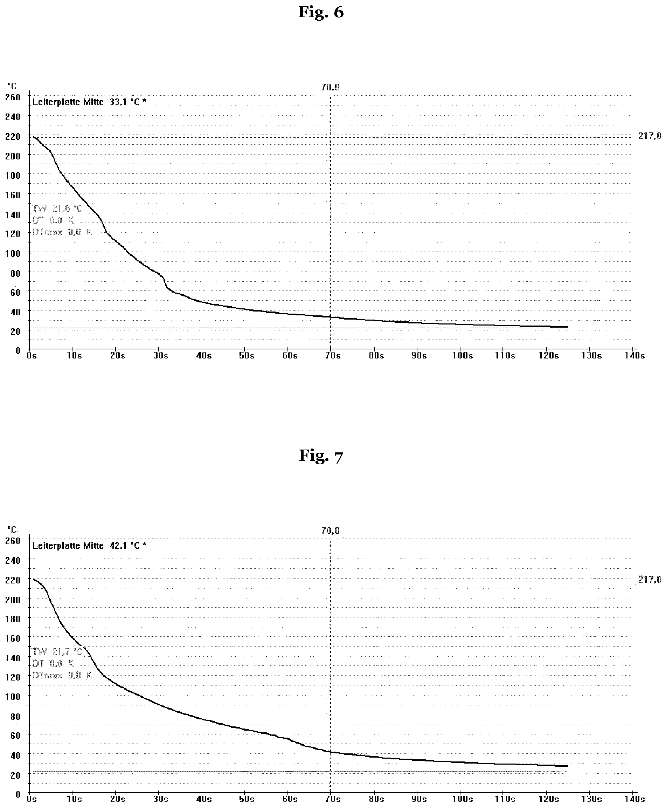

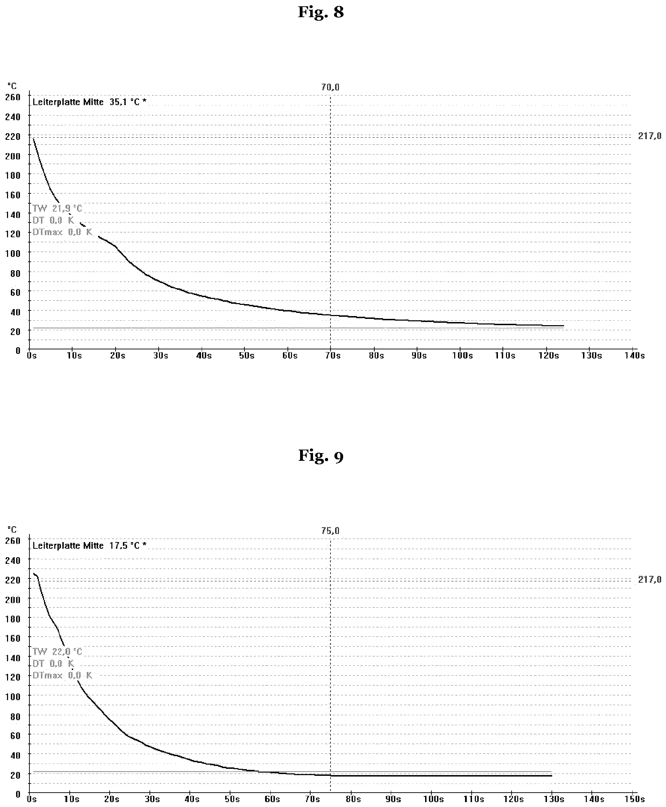

Die Figuren 6 bis 8 zeigen Kühlkurven für die Referenzelemente 510, 520 und 530. Die Temperatur der Referenzelemente 510, 520 und 530 am Beginn des Kühlvorgangs beträgt jeweils 217 °C. Die Temperatur der Kühlflüssigkeit 272 liegt in dem Bereich von 21,6 °C (Fig. 6) bis 21,9 °C (Fig. 8). Auf alle Referenzelemente 510, 520, 530 wird die gleiche Menge an Kühlflüssigkeit 272 aufgebracht. Nach 70 s werden die erreichten Temperaturen in der Mitte der Referenzelemente 510, 520 und 530 mit Hilfe der Temperaturmessvorrichtung 545 bestimmt. Die Zeit von 70 s entspricht in etwa der Entladezeit des gelöteten Lötguts 445 und der Beladezeit des neu zu lötenden Lötguts 455 von Dampfphasen-Lötanlagen 200, die im Batch-Betrieb arbeiten.

Das 2,0 mm dicke Referenzelement 510 weist nach 70 s Kühlzeit eine Temperatur von 33,1 °C auf. Die Temperatur des 2,6 mm dicken Referenzelements 520 beträgt am Ende der Kühlperiode 42,1 °C, während das 4,0 mm dicke Referenzelement 530 eine Temperatur von 35,1 °C aufweist. Die Systematik, dass die Temperatur am Ende des Kühlprozesses mit steigender Dicke des Referenzelements aufgrund dessen zunehmender Masse anwächst, wird durch das Referenzelement 520 mit der mittleren Dicke von 2,6 mm durchbrochen. Wie aus der Figur 5 zu entnehmen ist, weist das Referenzelement 520 im oberen Bereich und im linken Randbereich großflächige Metallbeschichtungen auf. Wie bereits angedeutet, ist die Wärmekapazität der Metallbeschichtung um ein Vielfaches höher als die Wärmekapazität des FR4 Materials der Leiterplatte 250. Da die Metallbeschichtung des Referenzelements 520 von dem Thermoelement 545 durch thermisch schlecht leitendes FR4 Material getrennt ist, geht die Entwärmung oder Kühlung des Referenzelements 520 langsamer vonstatten als für das 4,0 mm dicke Referenzelement 530.

Für einen Ausschnitt aus einer Leiterplatte, der als Referenzelement 240 verwendet wird und der das thermische Verhalten der gesamten Leiterplatte präzise nachbilden soll, ist darauf zu achten, dass die Materialzusammensetzung des Ausschnitts die Materialzusammensetzung der gesamten Leiterplatte 260 repräsentiert, so dass das Wärmeleitvermögen des Ausschnitts vergleichbar mit dem Wärmeleitvermögen der gesamten Leiterplatte 260 ist.

Die Fig. 9 zeigt die Kühlkurve des Referenzelements 530 mit einer gegenüber der Fig. 8 verdoppelten Menge an Kühlflüssigkeit 272. Die Ausgangstemperatur zu Beginn des Kühlvorgangs liegt bei etwa 225 °C. Die Kühlflüssigkeit 272 weist eine Temperatur von 22 °C auf. Die erhöhte Zufuhr an Kühlflüssigkeit 272 reduziert die Kühlzeit deutlich. Nach etwa 50 s weist das Referenzelement 530 im Wesentlichen die Temperatur der Kühlflüssigkeit 272 auf. Aus den Figuren 8 und 9 ergibt sich, dass durch Variation der Menge der Kühlflüssigkeit 272 der Zeitraum zum Abkühlen des Referenzelements 240 von der Löttemperatur auf die Umgebungstemperatur an die Bedürfnisse des jeweiligen Dampfphasen-Lötanlagen-Typs angepasst werden kann.

Der Einsatz der in dieser Anmeldung beschriebenen Überwachungsvorrichtung ist nicht auf Dampfphasen-Lötanlagen beschränkt. Vielmehr kann diese Überwachungsvorrichtung dazu benutzt werden, um den Temperaturverlauf eines Lötprofils in einer Reflow-Lötanlage zu bestimmen; insbesondere kann die präsentierte Überwachungsvorrichtung in Konvektions-Lötanlagen eingesetzt werden. Damit wird auch für Reflow-Lötanlagen die Möglichkeit eröffnet, den Aufheizvorgang des Lötguts mit Hilfe einer geschlossenen Regelschleife zu überwachen.

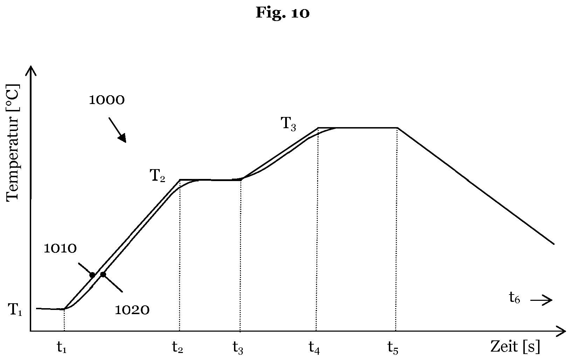

In der Anordnung 1000 der Fig. 10 ist in dem in der Fig. 1 dargestellten Lötprofil 1010, das mit der Temperaturmessvorrichtung 245, 545 der Überwachungsvorrichtung 235 gemessene Aufheizprofil 1020 schematisch gegenübergestellt. Die von der Temperaturmessvorrichtung 245, 545 ermittelte Aufheizkurve 1020 wird von dem Computersystem 280 geregelt. Als Stellgröße benutzt das Computersystem 280 neben der Heizleistung der Heizung 215 alternativ die Kühlleistung der Kühlvorrichtung 225. Ferner kann das Computersystem 280 sowohl die Heizleistung der Heizung 215 als auch die Kühlleistung der Kühlvorrichtung 225 als Stellgröße benutzen. Damit können unterschiedliche Ansprechzeitkonstanten der Vorrichtungen 215 und 225 zumindest zum Teil kompensiert werden.

Durch Berücksichtigen der Ansprechzeitkonstante der Heizung 215 der Dampfphasen-Lötanlage 200 kann das vorgegebene Lötprofil 1010 nahezu verzögerungsfrei nachgebildet werden. Darüber hinaus ist es möglich, die Position des Lötguts 255 in der Prozesskammer 220 als Stellgröße einzusetzen. Ferner ist es denkbar, eine Kombination aus Heizleistung und/oder Kühlleistung und/oder der Position des Lötguts 255 in der Prozesskammer 220 als Stellgröße zu verwenden.

## Patentansprüche

1. Überwachungsvorrichtung (235) für eine Dampfphasen-Lötanlage (200), aufweisend:
a. ein Referenzelement (240, 510, 520, 530);
b. eine Messvorrichtung (245, 545) zum Messen einer Temperatur des Referenzelements (240, 510, 520, 530);
c. eine Aufnahme (250), um das Referenzelement (240, 510, 520, 530) zusammen mit einem Lötgut (255, 455) so in der Dampfphasen-Lötanlage (200) anzuordnen, dass es zumindest abschnittsweise im Wesentlichen einen gleichen Prozess wie das Lötgut (255, 455) durchläuft;
d. wobei das Referenzelement (240, 510, 520, 530) so ausgebildet ist, dass ein Wärmeleitvermögen des Referenzelements (240, 510, 520, 530) innerhalb eines Bereichs von 70% bis 130% des Wärmeleitvermögens des Lötguts (255, 455) liegt;
**gekennzeichnet durch**:
e. eine Kühlvorrichtung (270) zum Kühlen des Referenzelements (240, 510, 520, 530).

2. Überwachungsvorrichtung (235) nach Anspruch 1, wobei das Referenzelement (240, 510, 520, 530) eine Materialzusammensetzung und/oder einen Aufbau aufweist, der im Wesentlichen einer Materialzusammensetzung und/oder dem Aufbau des Lötguts (255, 445, 455) entspricht.

3. Überwachungsvorrichtung (235) nach Anspruch 1, wobei das Referenzelement (240) ein elektrisch isolierendes Basismaterial einer Leiterplatte umfasst, wobei ein Wärmeleitvermögen des Referenzelements durch eine Wahl einer Dicke des Basismaterials der Leiterplatte und/oder durch eine geeignete Anzahl von Bohrungen durch das Basismaterial der Leiterplatte auf das Wärmeleitvermögen des Lötguts (255, 445, 455) abstimmbar ist.

4. Überwachungsvorrichtung (235) nach Anspruch 3, wobei das elektrisch isolierende Basismaterial der Leiterplatte (260) des Referenzelements (240) ein elektrisch isolierendes Basismaterial einer Leiterplatte (260) des Lötguts (255, 445, 455) umfasst.

5. Überwachungsvorrichtung (235) nach einem der vorhergehenden Ansprüche, wobei die Aufnahme (250) ausgebildet ist, um das Referenzelement (240, 510, 520, 530) während eines Aufheizvorgangs in der Dampfphasen-Lötanlage (200) im Wesentlichen auf einer gleichen Höhe wie das Lötgut (255, 455) anzuordnen.

6. Überwachungsvorrichtung (235) nach einem der vorhergehenden Ansprüche, wobei die Kühlvorrichtung (270) ausgebildet ist, um das Referenzelement (240, 510, 520, 530) während des Entladens des Lötguts (445) und/oder des Beladens eines neuen Lötguts (255, 455) in der Dampfphasen-Lötanlage (200) zu kühlen.

7. Überwachungsvorrichtung (235) nach einem der vorhergehenden Ansprüche, wobei die Kühlvorrichtung (270) ausgebildet ist, um die Temperatur des Referenzelements (240, 510, 520, 530) in Wesentlichen auf die Temperatur abzukühlen, die das Lötgut (255, 455) am Beginn des Aufheizvorgangs in der Dampfphasen-Lötanlage (200) aufweist.

8. Überwachungsvorrichtung (235) nach einem der vorhergehenden Ansprüche, wobei die Kühlvorrichtung (270) das Referenzelement (240, 510, 520, 530) durch Aufbringen einer Flüssigkeit (272) kühlt, die zum Löten in der Dampfphasen-Lötanlage (200) verdampft wird.

9. Überwachungsvorrichtung (235) nach einem der vorhergehenden Ansprüche, wobei die Kühlvorrichtung (270) die Flüssigkeit (272) einem Filterkreislauf der Dampfphasen-Lötanlage (200) entnimmt.

10. Überwachungsvorrichtung (235) nach einem der vorhergehenden Ansprüche, ferner aufweisend eine Vorrichtung zum automatischen Wechseln des Referenzelements (240, 510, 520, 530).

11. Überwachungsvorrichtung (235) nach einem der vorhergehenden Ansprüche ferner aufweisend eine Regelung, die ausgebildet ist, eine Heizung (215) und/oder eine Kühlung (225) einer Dampfphasen-Lötanlage (200) in Abhängigkeit von der mit der Messvorrichtung (245, 545) gemessenen Temperatur zu regeln.

12. Überwachungsvorrichtung (235) nach einem der vorhergehenden Ansprüche, weiterhin aufweisend ein Speichermedium (282), das ein vorgegebenes Temperaturprofil zumindest eines Aufheizvorgangs für das Lötgut (255, 455) speichert und wobei die Regelung ausgebildet ist, den Temperaturverlauf des Lötguts (255, 455) gemäß dem gespeicherten Temperaturprofil zu regeln.

13. Dampfphasen-Lötanlage (200) aufweisend:
a. zumindest eine Heizung (215) und/oder eine Kühlung (225);
**gekennzeichnet durch**:
b. zumindest eine Überwachungsvorrichtung (235) nach einem der vorhergehenden Ansprüche.

14. Verfahren zum Überwachen einer Dampfphasen-Lötanlage (200), unter Verwendung einer Überwachungsvorrichtung (235), aufweisend:
a. Anordnen eines Referenzelements (240, 510, 520, 530) zusammen mit einem Lötgut (255, 455) auf einer Aufnahme (250), so dass es zumindest abschnittsweise im Wesentlichen einen gleichen Prozess wie das Lötgut (255, 455) durchläuft;
b. Messen einer Temperatur des Referenzelements (240, 510, 520, 530) durch eine Messvorrichtung (245, 545) der Überwachungsvorrichtung (235);
**gekennzeichnet durch**:
c. Kühlen des Referenzelements (240, 510, 520, 530) mit einer Kühlvorrichtung (270) der Überwachungsvorrichtung (235);
d. wobei das Referenzelement (240, 510, 520, 530) ein Wärmeleitvermögen aufweist, das innerhalb eines Bereichs von 70% bis 130% des Wärmeleitvermögens des Lötguts (255, 455) liegt.

## Claims

1. A monitoring apparatus (235) for a vapor phase soldering system (200), comprising:
a. a reference element (240, 510, 520, 530);
b. a measuring device (245, 545) for measuring a temperature of the reference element (240, 510, 520, 530);
c. a receptacle (250) for placing the reference element (240, 510, 520, 530) together with a material to be soldered (255, 455) in the vapor phase soldering system (200) such that it undergoes, at least in sections, substantially the same process as the material to be soldered (255, 455);
d. the reference element (240, 510, 520, 530) being configured such that a thermal conductivity of the reference element (240, 510, 520, 530) is within a range of 70% to 130% of the thermal conductivity of the material to be soldered (255, 455);
**characterized by**
e. a cooling device (270) for cooling the reference element (240, 510, 520, 530).

2. The monitoring apparatus (235) according to claim 1, wherein the reference element (240, 510, 520, 530) has a material composition and/or structure substantially corresponding to a material composition and/or structure of the material to be soldered (255, 445, 455).

3. The monitoring apparatus (235) according to claim 1, wherein the reference element (240) comprises an electrically insulating base material of a printed circuit board, wherein a thermal conductivity of the reference element is tunable to the thermal conductivity of the material to be soldered (255, 445, 455) by a choice of a thickness of the base material of the printed circuit board and/or by a suitable number of holes through the base material of the printed circuit board.

4. The monitoring apparatus (235) according to claim 3, wherein the electrically insulating base material of the printed circuit board (260) of the reference element (240) comprises an electrically insulating base material of a printed circuit board (260) of the material to be soldered (255, 445, 455).

5. The monitoring apparatus (235) according to any one of the preceding claims, wherein the receptacle (250) is configured to place the reference element (240, 510, 520, 530) at substantially the same height as the material to be soldered (255, 455) during a heating process in the vapor phase soldering system (200).

6. The monitoring apparatus (235) according to any one of the preceding claims, wherein the cooling device (270) is adapted to cool the reference element (240, 510, 520, 530) during unloading of the material to be soldered (445) and/or loading of a new material to be soldered (255, 455) in the vapor phase soldering system (200).

7. The monitoring apparatus (235) according to any of the preceding claims, wherein the cooling device (270) is adapted to cool the temperature of the reference element (240, 510, 520, 530) substantially to the temperature that the material to be soldered (255, 455) has at the beginning of the heating process in the vapor phase soldering system (200).

8. The monitoring apparatus (235) according to any one of the preceding claims, wherein the cooling device (270) cools the reference element (240, 510, 520, 530) by applying a liquid (272) that is vaporized for soldering in the vapor phase soldering system (200).

9. The monitoring apparatus (235) according to any of the preceding claims, wherein the cooling device (270) takes the liquid (272) from a filter circuit of the vapor phase soldering system (200).

10. The monitoring apparatus (235) according to any one of the preceding claims, further comprising an apparatus for automatically changing the reference element (240, 510, 520, 530).

11. The monitoring apparatus (235) according to any one of the preceding claims, further comprising a controller configured to control a heater (215) and/or a cooler (225) of a vapor phase soldering system (200) in dependence on the temperature measured by the measuring device (245, 545).

12. The monitoring apparatus (235) according to any one of the preceding claims, further comprising a storage medium (282) that stores a predetermined temperature profile of at least one heating process for the material to be soldered (255, 455) and wherein the control is adapted to control the temperature profile of the material to be soldered (255, 455) according to the stored temperature profile.

13. A vapor phase soldering system (200) comprising:
a. at least one heating (215) and/or at least one cooling (225);
**characterized by**
b. at least one monitoring apparatus (235) according to any of the preceding claims.

14. A method for monitoring a vapor phase soldering system (200) using a monitoring apparatus (235⁾, comprising:
a. placing a reference element (240, 510, 520, 530) together with a material to be soldered (255, 455) on a receptacle (250) so that it undergoes, at least in sections, substantially the same process as the material to be soldered (255, 455);
b. measuring a temperature of the reference element (240, 510, 520, 530) by a measuring device (245, 545) of the monitoring apparatus (235);
**characterized by**
c. cooling the reference element (240, 510, 520, 530) with a cooling device (270) of the monitoring apparatus (235);
d. wherein the reference element (240, 510, 520, 530) has a thermal conductivity that is within a range of 70% to 130% of the thermal conductivity of the material to be soldered (255, 455).

## Revendications

1. Dispositif de surveillance (235) pour une installation de brasage en phase vapeur (200), comprenant :
a. un élément de référence (240, 510, 520, 530) ;
b. un dispositif de mesure (245, 545) pour la mesure d'une température de l'élément de référence (240, 510, 520, 530) ;
c. un récepteur (250) pour mettre en place l'élément de référence (240, 510, 520, 530) conjointement avec un produit de brasage (255, 455) dans l'installation de brasage en phase vapeur (200), de façon qu'il suive au moins par portions sensiblement un processus identique au produit de brasage (255, 455) ;
d. dans lequel l'élément de référence (240, 510, 520, 530) est conçu de façon qu'une conductibilité thermique de l'élément de référence (240, 510, 520, 530) se situe à l'intérieur d'une plage de 70 % à 130 % de la conductibilité thermique du produit de brasage (255, 455) ;
**caractérisé par** :
e. un dispositif de refroidissement (270) pour le refroidissement de l'élément de référence (240, 510, 520, 530).

2. Dispositif de surveillance (235) selon la revendication 1, dans lequel l'élément de référence (240, 510, 520, 530) comporte une composition matérielle et/ou une structure qui correspond sensiblement à une composition matérielle et/ou à la structure du produit de brasage (255, 445, 455).

3. Dispositif de surveillance (235) selon la revendication 1, dans lequel l'élément de référence (240) inclut un matériau de base électriquement isolant d'une plaque de circuit imprimé, dans lequel une conductibilité thermique de l'élément de référence est ajustable sur la conductibilité thermique du produit de brasage (255, 445, 455) par l'intermédiaire d'un choix d'une épaisseur du matériau de base de la plaque de circuit imprimé et/ou par l'intermédiaire d'un nombre approprié de perçages à travers le matériau de base de la plaque de circuit imprimé.

4. Dispositif de surveillance (235) selon la revendication 3, dans lequel le matériau de base électriquement isolant de la plaque de circuit imprimé (260) de l'élément de référence (240) inclut un matériau de base électriquement isolant d'une plaque de circuit imprimé (260) du produit de brasage (255, 445, 455).

5. Dispositif de surveillance (235) selon une des revendications précédentes, dans lequel le récepteur (250) est conçu pour mettre en place l'élément de référence (240, 510, 520, 530) pendant une opération de chauffage dans l'installation de brasage en phase vapeur (200) sensiblement à une hauteur identique au produit de brasage (255, 455).

6. Dispositif de surveillance (235) selon une des revendications précédentes, dans lequel le dispositif de refroidissement (270) est conçu pour refroidir l'élément de référence (240, 510, 520, 530) pendant le déchargement du produit de brasage (445) et/ou pendant le chargement d'un nouveau produit de brasage (255, 455) dans l'installation de brasage en phase vapeur (200) .

7. Dispositif de surveillance (235) selon une des revendications précédentes, dans lequel le dispositif de refroidissement (270) est conçu pour refroidir la température de l'élément de référence (240, 510, 520, 530) sensiblement à la température que le produit de brasage (255, 455) présente au début de l'opération de chauffage dans l'installation de brasage en phase vapeur (200).

8. Dispositif de surveillance (235) selon une des revendications précédentes, dans lequel le dispositif de refroidissement (270) refroidit l'élément de référence (240, 510, 520, 530) par application d'un liquide (272) qui est vaporisé pour le brasage dans l'installation de brasage en phase vapeur (200).

9. Dispositif de surveillance (235) selon une des revendications précédentes, dans lequel le dispositif de refroidissement (270) prélève le liquide (272) sur un circuit de filtration de l'installation de brasage en phase vapeur (200).

10. Dispositif de surveillance (235) selon une des revendications précédentes, comprenant en outre un dispositif pour le remplacement automatique de l'élément de référence (240, 510, 520, 530).

11. Dispositif de surveillance (235) selon une des revendications précédentes, comprenant en outre une régulation qui est conçue pour réguler un chauffage (215) et/ou un refroidissement (225) d'une installation de brasage en phase vapeur (200) en fonction de la température mesurée avec le dispositif de mesure (245, 545) .

12. Dispositif de surveillance (235) selon une des revendications précédentes, comprenant par ailleurs un moyen de mémoire (282) qui mémorise un profil de température prescrit au moins d'une opération de chauffage pour le produit de brasage (255, 455), et la régulation étant conçue pour réguler la variation de température du produit de brasage (255, 455) conformément au profil de température mémorisé.

13. Installation de brasage en phase vapeur (200) comprenant :
a. au moins un chauffage (215) et/ou un refroidissement (225) ;
**caractérisée par** :
b. au moins un dispositif de surveillance (235) selon une des revendications précédentes.

14. Procédé de surveillance d'une installation de brasage en phase vapeur (200), par utilisation d'un dispositif de surveillance (235), comprenant :
a. la mise en place d'un élément de référence (240, 510, 520, 530) conjointement avec un produit de brasage (255, 455) sur un récepteur (250), de façon qu'il parcoure au moins par portions sensiblement un processus identique au produit de brasage (255, 455) ;
b. la mesure d'une température de l'élément de référence (240, 510, 520, 530) par l'intermédiaire d'un dispositif de mesure (245, 545) du dispositif de surveillance (235) ;
**caractérisé par** :
c. le refroidissement de l'élément de référence (240, 510, 520, 530) avec un dispositif de refroidissement (270) du dispositif de surveillance (235) ;
d. dans lequel l'élément de référence (240, 510, 520, 530) présente une conductibilité thermique qui se situe à l'intérieur d'une plage de 70 % à 130 % de la conductibilité thermique du produit de brasage (255, 455).
